(19) Europäisches Patentamt
European Patent Office
Office européen des brevets

(11) **EP 3 214 900 B1**

(12) **EUROPÄISCHE PATENTSCHRIFT**

(45) Veröffentlichungstag und Bekanntmachung des Hinweises auf die Patenterteilung:
**12.12.2018 Patentblatt 2018/50**

(51) Int Cl.:
*H05B 33/08* (2006.01)   *B60Q 1/08* (2006.01)
*F21S 41/64* (2018.01)   *F21S 41/663* (2018.01)
*F21S 41/675* (2018.01)

(21) Anmeldenummer: **17158290.1**

(22) Anmeldetag: **28.02.2017**

(54) **DIMMEN EINER LICHTQUELLE**

DIMMING OF A LIGHT SOURCE

GRADATION D'UNE SOURCE DE LUMIÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.03.2016 DE 102016002558**

(43) Veröffentlichungstag der Anmeldung:
**06.09.2017 Patentblatt 2017/36**

(73) Patentinhaber: **Audi AG**
**85045 Ingolstadt (DE)**

(72) Erfinder:
• **Gut, Carsten**
  **88662 Überlingen (DE)**
• **Vargas Rivero, Jose Roberto**
  **86161 Augsburg (DE)**

(56) Entgegenhaltungen:
**WO-A1-2015/089018    US-A1- 2015 124 468**

**EP 3 214 900 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine Beleuchtungsvorrichtung für ein Fahrzeug mit einer Lichtquelle, eine Ansteuereinrichtung zum Ansteuern der Lichtquelle und einer Flächenmodulationseinrichtung, mit der das Licht der Lichtquelle pixelweise modulierbar ist. Darüber hinaus betrifft die vorliegende Erfindung ein Verfahren zum Betreiben einer Beleuchtungsvorrichtung für ein Fahrzeug durch Ansteuern einer Lichtquelle und pixelweises Modulieren eines Lichts der Lichtquelle mit einer Flächenmodulationseinrichtung.

Insbesondere bei Fahrzeugen ist es von Bedeutung, besondere gewünschte bzw. vorgebbare Lichtverteilungen zu erzielen. Dazu ist es notwendig, ausreichend starke Lichtquellen zu verwenden, mit denen die gewünschte Lichtverteilung überhaupt realisierbar ist. Problematisch dabei ist, dass eine Lichtquelle nicht automatisch diejenige Lichtverteilung liefert, die gewünscht ist. Dementsprechend ist die Beleuchtungsstärke in Bereichen der zu beleuchtenden Oberfläche zu reduzieren bzw. zu dimmen.

Die Druckschrift US 2015/0124468 A1 beschreibt ein Scheinwerfermodul, welches mehrere Leuchtstoffe aufweist. Diese Leuchtstoffe können mittels elektromagnetischer Strahlung angeregt werden, sodass die Leuchtstoffe Licht emittieren. Strahlleiter werden eingesetzt, um die elektromagnetische Strahlung zu den Leuchtstoffen zu lenken. Jeder Leuchtstoff ist einer optischen Vorrichtung zugeordnet, sodass das emittierte Licht zu einem Gesamtbild zusammengefügt werden kann. Das Scheinwerfermodul ermöglicht eine dynamische, kostengünstige Lichtverteilung für unterschiedliche Fahrsituationen.

Aus der EP 1 363 065 A1 ist eine Gebäudeleuchte sowie ein Verfahren zur Simulation von Lichtverhältnissen von Gebäudeleuchten an Gebäudeflächen bekannt. Innerhalb des Gehäuses der Gebäudeleuchte ist als Lichtleitelement eine Vielzahl von Mikrospielgen und/oder LCD-Elementen angeordnet, die zur Erzeugung unterschiedlicher Lichtverteilungen unabhängig voneinander einzeln ansteuerbar sind.

Darüber hinaus offenbart die Druckschrift EP 1 443 355 A2 eine Beleuchtungsvorrichtung, bei der der Lichtstrahl mittels programmierbarer Mikrospiegel veränderbar ist. Eine derartige Beleuchtungsvorrichtung kann zur Beleuchtung einer Bühne verwendet werden. Die Gestalt des Strahls wird also durch die Mikrospiegel geformt. Das Licht selbst wird intensitätsmoduliert, indem zwischen zwei Zuständen entsprechend einem Duty-Cycle hin- und hergeschaltet wird.

Eine weitere Beleuchtungsvorrichtung mit Mikrospiegeln (DMD: digital micromirror device) ist aus der Druckschrift WO 2015/089018 A1 bekannt. Dabei werden die Mikrospiegel beispielsweise bei einem Duty-Cycle von 50% betrieben, um Temperatur- und Lagerprobleme zu reduzieren. Dabei werden die Mikrospiegel zwischen den Positionen "ein" und "aus" hin- und herbewegt.

Die Aufgabe der vorliegenden Erfindung besteht darin, mit möglichst geringer elektrischer Leistung eine gewünschte Lichtverteilung zu erzielen, sodass Temperaturprobleme vermieden werden können und der Energieverbrauch sinkt.

Erfindungsgemäß wird diese Aufgabe gelöst durch eine Beleuchtungsvorrichtung nach Anspruch 1 sowie ein Verfahren nach Anspruch 10. Vorteilhafte Weiterbildungen der Erfindung ergeben sich aus den Unteransprüchen.

Entsprechend der vorliegenden Erfindung ist demnach eine Beleuchtungsvorrichtung für ein Fahrzeug mit einer Lichtquelle, einer Ansteuereinrichtung zum Ansteuern der Lichtquelle und einer Flächenmodulationseinrichtung, mit der das Licht der Lichtquelle pixelweise modulierbar ist, vorgesehen. Die Lichtquelle wird von der Ansteuereinrichtung mit Strom versorgt. Entsprechend diesem elektrischen Strom erzeugt die Lichtquelle Licht mit korrespondierender Intensität. Die Flächenmodulationseinrichtung wird von der Lichtquelle bestrahlt und moduliert das Licht in Abhängigkeit vom Ort. Damit können unterschiedliche örtliche Lichtverteilungen erzeugt werden. Die Lichtquelle ist mit der Ansteuereinrichtung derart ansteuerbar, dass mehrere Rohlichtverteilungen erzeugbar sind. Dabei ist jede Rohlichtverteilung diejenige örtliche Lichtverteilung, die alleine mit der Lichtquelle erzielt wird und sich aus einem Strom einer jeweiligen Stromstärke ergibt, welcher in die Lichtquelle fließt. Dabei versteht man unter einer Rohlichtverteilung diejenige örtliche Lichtverteilung, die alleine mit der Lichtquelle erzielbar ist. Je nach Stromstärke, die in die Lichtquelle fließt, ergeben sich unterschiedliche Rohlichtverteilungen. Gegebenenfalls kann die Lichtquelle nicht nur über die Stromstärke gedimmt werden, sondern auch beispielsweise über eine geeignete Modulation des Stroms. Hierzu eignet sich besonders die Pulsweitenmodulation (PWM). Der Tastgrad bzw. "Duty-Cycle" der zwischen 0% und 100% liegen kann, bestimmt das Verhältnis zwischen Einschaltdauer und Ausschaltdauer. Über die Pulsweite kann damit die jeweilige Beleuchtungsstärke eingestellt werden.

Die Beleuchtungsvorrichtung weist eine Recheneinrichtung auf, mit der diejenige der mehreren Rohlichtverteilungen bestimmbar ist, welche den niedrigsten Beleuchtungsstärkeverlauf besitzt, der aber überall mindestens so hoch ist wie die vorgegebene Lichtverteilung. Mit der Recheneinrichtung ist vorzugsweise diejenige der mehreren, in der Regel zweidimensionalen Rohlichtverteilungen bestimmbar, welche zu einem möglichst geringen Leistungsverbrauch der Lichtquelle führt und gleichzeitig gewährleistet, dass eine vorgegebene Lichtverteilung mit der Flächenmodulationseinrichtung noch erreichbar ist. Die Flächenmodulationseinrichtung ist ausgestaltet, alle Bereiche der bestimmten Rohlichtverteilung, in denen die jeweiligen Beleuchtungsstärkewerte oberhalb der vorgegebenen Lichtverteilung liegen, in ihrer Beleuchtungsstärke zu reduzieren. Dies bedeutet, dass die Recheneinrichtung diejenige Rohlichtverteilung bestimmt bzw. berechnet, welche den niedrigsten Beleuchtungsstärkeverlauf besitzt, der aber überall mindestens so hoch ist wie die geforderte bzw. vorgegebene Lichtverteilung. Damit wird die Lichtquelle auf ein Minimum gedimmt, welches gerade noch die vorgegebene Lichtverteilung ermöglicht. Dabei bedeutet ein Minimum an Leistungsverbrauch bzw. ein möglichst geringer Leistungsverbrauch nicht zwangsläufig ein absolutes Minimum, sondern dasjenige Minimum, das die Beleuchtungsvorrichtung systembedingt erlaubt. Ist der Strom der Lichtquelle beispielsweise nur in gewissen Schritten verstellbar, so gilt hier als Minimum die geringste Stromstärkestufe, die die vorgegebene Lichtverteilung noch ermöglicht. Ähnliches gilt für die Pulsweitenmodulation, wenn diese nur in diskreten Schritten realisiert ist. In diesem Fall wird der niedrigste Duty-Cycle verwendet, der die vorgegebene Lichtverteilung noch gewährleistet.

Vorzugsweise sind die Rohlichtverteilungen, die mit der Ansteuerungseinrichtung und der Lichtquelle realisierbar sind, jeweils vorgegeben. Dies bedeutet, dass die Rohlichtverteilungen nicht beliebig erzeugt werden können, sondern dass sie für die Beleuchtungsvorrichtung diskret vorgegeben sind. Dadurch ist es nicht notwendig, etwaige Beleuchtungsstärken zu messen, da diese von vorne herein bekannt sind. Auf diese Weise lässt sich Mess- bzw. Rechenzeit einsparen.

Darüber hinaus können die vorgegebenen Rohlichtverteilungen jeweils durch eine entsprechende Näherungslichtverteilung angenähert sein. Beispielsweise lassen sich die Rohlichtverteilungen durch einfache Geometrien annähern. Insbesondere kann so etwa eine Gaußverteilung durch zwei übereinander liegenden Rechtecke angenähert sein. Das Beispiel der eindimensionalen Gaußverteilung lässt sich aber auch auf zweidimensionale Verteilungen ausweiten. So kann also jede beliebige zweidimensionale Verteilung, bei der die zwei Dimensionen die zu beleuchtende Fläche bilden und die Beleuchtungsstärke eine dritte Dimension darstellt, durch einfache geometrische Körper (z.B. Quader oder Zylinder) angenähert werden. Hierdurch ergeben sich wieder deutliche Vorteile bezüglich der Rechenzeit gegenüber einer Verwendung von komplizierten zweidimensionalen Verteilungen.

Bei einer weiteren vorteilhaften Ausgestaltung weist die Flächenmodulationseinrichtung ein DMD-Element (digital micromirror device), ein LCOS-Element (liquid crystal on silicon) oder ein LCD-Element (liquid crystal display) aufweisen. Mit derartigen Elementen ist es möglich, eine beleuchtete Fläche pixelweise zu modulieren.

Die Lichtquelle kann einen Leuchtdiode oder einen Laser umfassen. Derartige Lichtquellen zeichnen sich durch einen hohen Wirkungsfaktor aus und eignen sich daher in besonderer Weise dazu, vorgegebene Lichtverteilungen zu erzielen.

Bei einer speziellen Ausführungsform weist die Beleuchtungsvorrichtung neben der Lichtquelle mindestens eine weitere Lichtquelle auf, und die Lichtquellen werden von der Ansteuereinrichtung so gesteuert, dass bei jeder der Rohlichtverteilungen in Summe weißes Licht gebildet wird. Dies bedeutet, dass jede einzelne Lichtquelle nicht weißes Licht produzieren muss, aber das Resultat aller Lichtquellen weißes Licht ist. Wenn aber nun eine dieser farbigen Lichtquellen gedimmt wird, müssen die anderen farbigen Lichtquellen ebenfalls gedimmt werden, damit letztlich auf einer zu beleuchtenden Fläche wieder weißes Licht entsteht. Als Maß für das Dimmen kann der Duty-Cycle verwendet werden. Wenn der Duty-Cycle einer roten Lichtquelle von 100% auf 70% reduziert wird, muss nicht zwangsläufig auch eine blaue Lichtquelle auf einen Duty-Cycle von 70% reduziert werden. Vielmehr bestehen nicht lineare Zusammenhänge zwischen der elektrischen Leistung und der optischen Leistung. Diese nicht linearen Zusammenhänge sind in der Regel bei unterschiedlichen Lichtquellen auch verschieden. Dementsprechend kann es durchaus der Fall sein, dass der Duty-Cycle der blauen Lichtquelle auf 65% reduziert werden muss, damit in Summe beispielsweise von der roten Lichtquelle, der blauen Lichtquelle und einer etwaigen grünen Lichtquelle wieder weißes Licht erzeugt wird.

Bei einer anderen Weiterbildung weist die Beleuchtungsvorrichtung eine Sensoreinrichtung auf, mit der ein Umfeldparameter aus dem Umfeld der Beleuchtungsvorrichtung erfassbar ist, wobei die Recheneinrichtung, die Ansteuereinrichtung und/oder die Flächenmodulationseinrichtung dazu ausgebildet sind, dynamisch den Umfeldparameter zu berücksichtigen. Es können also beispielsweise fortlaufend mit einer Sensoreinrichtung aus dem Umfeld die Temperatur, die Luftfeuchtigkeit oder Fahrzeugdaten erfasst werden, welche dann ständig dazu genutzt werden, die Ansteuerung der Lichtquelle bzw. der Flächenmodulationseinrichtung zu aktualisieren.

Wie oben bereits angedeutet wurde, lässt sich eine derartige Beleuchtungsvorrichtung besonders vorteilhaft in einem Fahrzeug einsetzen. Speziell kann die Beleuchtungsvorrichtung als Scheinwerfer Einsatz finden, mit dem besondere Lichtverteilungen erzielbar sind.

Entsprechend der vorliegenden Erfindung wird auch ein Verfahren zum Betreiben einer Beleuchtungsvorrichtung für ein Fahrzeug durch Ansteuern einer Lichtquelle und pixelweises Modulieren eines Lichts der Lichtquelle mit einer Flächenmodulationseinrichtung bereitgestellt. Dabei wird die Lichtquelle zum Erzeugen einer von mehreren vorgegebenen Rohlichtverteilungen angesteuert. Die Rohlichtverteilung ist diejenige örtliche Lichtverteilung, die alleine mit der Lichtquelle erzielt wird und sich aus einem Strom einer jeweiligen Stromstärke ergibt, welcher in die Lichtquelle fließt. Wie auch oben bereits im Zusammenhang mit der Beleuchtungsvorrichtung dargestellt wurde, kann es sich bei der Rohlichtverteilung um eine zweidimensionale Verteilung, d.h. eine Verteilung über einer Fläche handeln. Diejenige der mehreren vorgegebenen Rohlichtverteilungen wird schließlich verwendet bzw. ausgewählt, welche einen niedrigsten Beleuchtungsstärkeverlauf besitzt, aber überall mindestens so hoch ist wie eine vorgegebene Lichtverteilung. Dies führt vorzugsweise zu einem möglichst geringen Leistungsverbrauch der Lichtquelle und gleichzeitig gewährleistet, dass eine vorgegebene Lichtverteilung noch erreichbar ist. Es wird also wieder diejenige Lichtverteilung gesucht, die mit möglichst geringer Leistungsaufnahme die Realisierung der vorgegebenen Lichtverteilung garantiert. Dies bedeutet, dass jeder Punkt der ausgewählten Rohlichtverteilung einen mindestens so hohen Beleuchtungsstärkewert besitzt wie der korrespondierende Punkt der vorgegebenen Lichtverteilung.

Alle Bereiche der bestimmten Rohlichtverteilung werden mithilfe der Flächenmodulationseinrichtung in ihrer Beleuchtungsstärke reduziert, in denen die jeweiligen Beleuchtungsstärkewerte oberhalb der vorgegebenen Lichtverteilung liegen. Vorzugsweise wird damit das Licht der Lichtquelle mit der Flächenmodulationseinrichtung derart moduliert, dass die vorgegebene Lichtverteilung erreicht wird. D.h. alle Bereiche der Rohlichtverteilung, in denen die jeweiligen Beleuchtungsstärkewerte oberhalb der vorgegebenen Lichtverteilung liegen, werden gedimmt bzw. in ihrer Beleuchtungsstärke reduziert. Diese Reduktion der Beleuchtungsstärke wird ortsabhängig durch die Flächenmodulationseinrichtung erreicht.

Die oben genannten funktionellen Merkmale der Beleuchtungsvorrichtung lassen sich sinngemäß auch auf das soeben geschilderte Verfahren als Verfahrensmerkmale übertragen.

Die vorliegende Erfindung wird nun anhand der beigefügten Zeichnungen näher erläutert, in denen zeigen:

Fig. 1      eine Prinzipskizze zum Erzeugen einer Lichtverteilung;

Fig. 2      ein Blockschaltdiagramm, das die interne Struktur eines Scheinwerfers darstellt;

Fig. 3      ein Diagramm zum Erzeugen einer gewünschten Lichtverteilung;

Fig. 4      ein Diagramm zur Darstellung einer Näherungslichtverteilung; und

Fig. 5      ein Diagramm zur Darstellung einer Gesamtlichtverteilung für zwei Lichtquellen.

Die nachfolgend näher geschilderten Ausführungsbeispiele stellen bevorzugte Ausführungsformen der vorliegenden Erfindung dar.
Die Ausführungsbeispiele beziehen sich auf Beleuchtungsvorrichtungen für beliebige Einsatzzwecke, insbesondere als Scheinwerfer für Fahrzeuge. Andere Einsatzzwecke sind, z.B., Beleuchtungsvorrichtungen für Gebäude und Veranstaltungen.

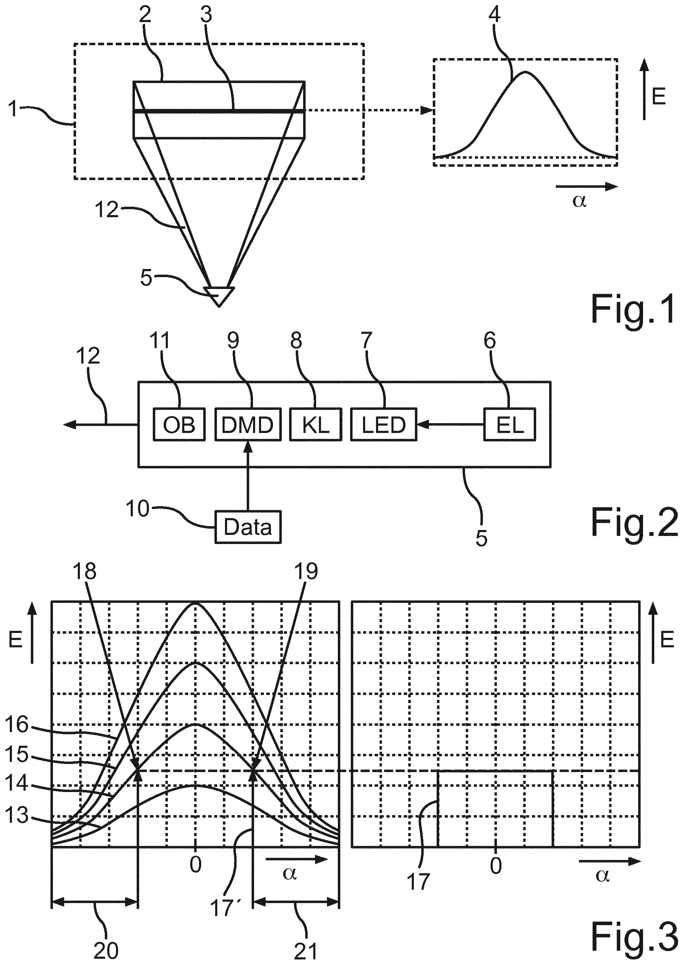

Fig. 1 zeigt beispielsweise eine Oberfläche 1, die beleuchtet werden soll. Auf dieser Oberfläche 1 soll eine vorgegebene bzw. gewünschte Lichtverteilung 2 erzeugt werden. Bei dieser Lichtverteilung 2 handelt es sich um eine örtlich zweidimensionale Verteilung, also eine Verteilung über einer Teilfläche der Oberfläche 1. Die Lichtverteilung 2 ergibt sich dadurch, dass sich ortsabhängig über diesem zweidimensionalen Teilbereich eine jeweilige Beleuchtungsstärke E ergibt. In Fig. 1 ist ein eindimensionaler Querschnitt dieser zweidimensionalen Lichtverteilung 2 als Linie eingezeichnet. Die korrespondierende eindimensionale Lichtverteilung 4 ist im Bild rechts dargestellt. Für diese eindimensionale Lichtverteilung 4 ist die Beleuchtungsstärke E über dem Winkel a, der die Ortsdimension darstellt, als die eine Dimension aufgetragen. Im vorliegenden Beispiel ist eine Gaußverteilung für die Lichtverteilung gewählt. Die Lichtverteilung kann aber auch jede andere Form besitzen.
Fig. 2 gibt schematisch den Aufbau bzw. die innere Struktur eines Schweinwerfers 5 wieder, der in Fig. 1 die Lichtverteilung 2 erzeugt. Dieser Scheinwerfer 5 steht stellvertretend für eine erfindungsgemäße Beleuchtungsvorrichtung. Er besitzt eine Elektronik 6, die eine LED 7 ansteuert. Als Lichtquelle kann an Stelle der LED 7 auch beispielsweise ein Laser eingesetzt werden oder eine andere geeignete Lichtquelle. Darüber hinaus kann der Scheinwerfer 5 auch mehrere Lichtquellen, z.B. mehrere LEDs (gegebenenfalls in unterschiedlichen Farben) aufweisen.
Optional befindet sich am Lichtausgang der Lichtquelle bzw. der LED eine Kollimationsoptik 8 (KL). Der Kollimationsoptik 8 ist ein Flächenmodulator nachgeschaltet, der im vorliegenden Beispiel als DMD 9 realisiert ist. Das DMD 9 wird von einer Datenquelle 10, die scheinwerferextern sein kann, angesteuert. Beispielsweise werden von der Datenquelle 10 ein PWM-Signal mit 8 Bit für jedes Pixel mit einer Wiederholungsfrequenz 60 Hz an das DMD 9 geschickt. Der optische Ausgang des DMD 9 wird über ein oder mehrere optionale Objektive 11 vom Scheinwerfer als Lichtausgangsstrahl 12 abgesandt.

Die in Fig. 1 dargestellte zweidimensionale Lichtverteilung 2 kann durch Flächenmodulation mit der Beleuchtungsvorrichtung bzw. dem Scheinwerfer 5 von Fig. 2 erzielt werden. Als Flächenmodulator wird beispielsweise das DMD 9, ein LCOS oder ein LCD verwendet. Im Folgenden wird stellvertretend für all diese Flächenmodulatoren stets das DMD verwendet.

Das Elektronikmodul 6 des Scheinwerfers 5 steuert die LED 7 (im Folgenden stellvertretend für eine beliebige Lichtquelle) entweder über die Stromstärke oder beispielsweise den Duty-Cycle einer Pulsweitenmodulation (PWM). Es ergeben sich dabei beispielsweise die diskreten Rohlichtverteilungen 13, 14, 15 und 16, die in Fig. 3 dargestellt sind. Im vorliegenden Beispiel sind stellvertretend für andere Lichtverteilungen die diskreten Rohlichtverteilungen 13 bis 16 als gaußförmig dargestellt, wobei die Rohlichtverteilung 13 den geringsten Maximalwert und die Rohlichtverteilung 16 den höchsten Maximalwert über dem Winkel $\alpha$ = 0 hat. Bei der PWM-Dimmung gilt: Je größer der Duty-Cycle ist, desto größer ist der Lichtstrom der LED. Die PWM- oder Stromdimmung ist jedoch nicht so flexibel, da immer die gesamte Rohlichtverteilung angepasst werden muss, wie die Kurven 13 bis 16 zeigen. Damit sind sehr spezielle Lichtverteilungen, wie beispielsweise die rechteckige Verteilung 17 aus Fig. 3 nicht realisierbar.

Eine Alternative zur Einstellung der ortsspezifischen Beleuchtungsstärke, d.h. der Lichtverteilung, besteht darin, das Datensignal für jedes Pixel des DMD-Moduls 9 entsprechend der gewünschten Verteilung anzupassen. Zur Ansteuerung eines Flächenmodulators bzw. DMD-Moduls 9 wird typischerweise auch ein PWM-Signal verwendet. Dabei wird in "Ausschaltphasen" eines Mikrospiegels das betreffende Licht durch diesen auf einen Absorber gelenkt. Der Nachteil dieser Methode ist, dass für kleine Duty-Cycle ein großer Teil des Lichts, welches aus der LED 7 kommt, also absorbiert werden muss.

Erfindungsgemäß wird dieser Nachteil dadurch behoben, dass die gewünschte Lichtverteilung durch eine Mischung der beiden Methoden "Dimmung der LED" und "Dimmung via Duty-Cycle der Mikrospiegel" erzeugt wird. Dabei wird von der Lichtquelle bzw. der LED 7 nur so viel Licht erzeugt, wie systembedingt für die Erzielung der gewünschten Lichtverteilung notwendig ist.

In Fig. 3 ist in der rechten Graphik beispielhaft eine rechteckförmige, gewünschte Lichtverteilung 17 dargestellt. Über einem gewissen Winkelbereich in negativer und positiver Richtung soll also beispielsweise eine homogene Beleuchtungsstärke E erzielt werden. Die LED 7 ist beispielsweise von der Elektronik 6 so ansteuerbar, dass die vier verschiedenen, hier gaußförmigen Lichtverteilungen 13 bis 16 möglich sind, die im linken Bild von Fig. 3 dargestellt sind. Diese Lichtverteilungen 13 bis 16 stellen sich ein, wenn das DMD-Modul 9 nicht dimmt, d.h. der Duty-Cycle de DMD-Moduls für alle Spiegel 100% beträgt.

Um nun möglichst wenig Energie unnütz in einen Absorber schicken zu müssen, wird die LED 7 mit einer möglichst geringen Stromstärke bzw. einem möglichst geringem Duty-Cycle des PWM-Ansteuersignals betrieben. (Anmerkung: Duty-Cycle des PWM-Ansteuersignals unterscheidet sich vom jeweiligen Duty-Cycle der Mikrospiegel!) Im vorliegenden Beispiel reicht die zweitniedrigste Rohlichtverteilung 14 aus, um die gewünschte Lichtverteilung 17 realisieren zu können. Bei jedem Winkel ist nämlich die Beleuchtungsstärke dieser Rohlichtverteilung 14 mindestens so hoch wie bei der gewünschten Lichtverteilung 17. Im vorliegenden Beispiel kann das DMD-Modul an den Ecken 18 und 19 mit einem Duty-Cycle von 100% betrieben werden. In diesen Randbereichen muss das Licht der LED 7 also durch das DMD-Modul nicht gedimmt werden. Dies veranschaulicht die in die Rohlichtverteilungen 13 bis 16 projizierte gewünschte Lichtverteilung 17', die der in Fig. 3 rechts dargestellten gewünschten Lichtverteilung 17 entspricht.

Diese projizierte Lichtverteilung 17' berührt an ihren Ecken die Rohlichtverteilung 14 der LED 7.

Damit die gewünschte Lichtverteilung 17 bzw. 17' aus der von der LED 7 gelieferten Rohlichtverteilung 14 auch tatsächlich entstehen kann, muss in den Bereichen 20 und 21 links und rechts neben der gewünschten Lichtverteilung 17 bzw. 17' eine Anpassung durch das DMD-Modul 9 erfolgen. Speziell muss der Duty-Cycle des DMD-Moduls in diesen Bereichen 20 und 21 auf 0% reduziert werden. In dem mittleren Bereich zwischen den Bereichen 20 und 21, d.h. über der gewünschten Lichtverteilung 17 bzw. 17' muss die Rohlichtverteilung 14 ebenfalls reduziert werden. Dementsprechend müssen die Duty-Cycles für die Pixel in dem Bereich der gewünschten Lichtverteilung 17 bzw. 17' mit Ausnahme der Eckbereiche 18 und 19 unter 100% reduziert werden. Die größte Reduktion der Duty-Cycle des DMD-Moduls 9 über der gewünschten Lichtverteilung 17' muss demnach bei demjenigen Pixel bei 0° erfolgen.

Die Rohlichtverteilungen 13 bis 16 in Fig. 3 sind sowohl von der Form als auch von der Anzahl rein exemplarisch. Durch die Ansteuerung der LED 7 bzw. einer anderen Lichtquelle durch die Elektronik 6 können gegebenenfalls auch andere Verteilungen, insbesondere auch homogene Verteilungen, erzielbar sein. Aus Gründen der Rechenzeit ist es günstig, wenn die Anzahl der Verteilungen nicht allzu hoch gewählt wird. So lässt sich rasch diejenige Verteilung finden, die gerade noch über der gewünschten Lichtverteilung liegt und gemäß der die LED 7 gedimmt werden muss, um möglichst wenig Energie für die gewünschte Lichtverteilung zu verschwenden.

Eine spezielle Ausführungsform eines erfindungsgemäßen Verfahrens lässt sich mit folgenden Schritten zusammenfassen:

    a) Eine gewünschte Lichtverteilung wird berechnet (z.B. in Abhängigkeit von Sensordaten, Fahrzeugdaten, Umweltbedingungen und dergleichen)
    b) Eine minimale Hüllfläche bzw. Rohlichtverteilung wird bestimmt, die die gewünscht Lichtverteilung abdeckt.
    c) Die LED wird gedimmt, bis die minimale Hüllfläche bzw. Rohlichtverteilung erreicht ist (dabei werden alle Spiegel des DMD mit einem Duty-Cycle von 100% betrieben).
    d) Eine Anpassung der Rohlichtverteilung an die gewünschte Lichtverteilung wird durch entsprechende Steuerung der DMD-Moduls 9 pixelweise erreicht.
    e) Falls sich die Lichtfunktion des Fahrzeugs bzw. die gewünschte Lichtverteilung und/oder eine Umgebungsbedingung des Fahrzeugs ändert, muss wieder mit Schritt a) begonnen werden.

In vorteilhafter Weise erhöht die erfindungsgemäße Kombination von LED-Dimmung und Duty-Cycle-Dimmung des DMD die Effizienz des Systems. Dadurch wird weniger Strom verbraucht und weniger Hitze erzeugt.

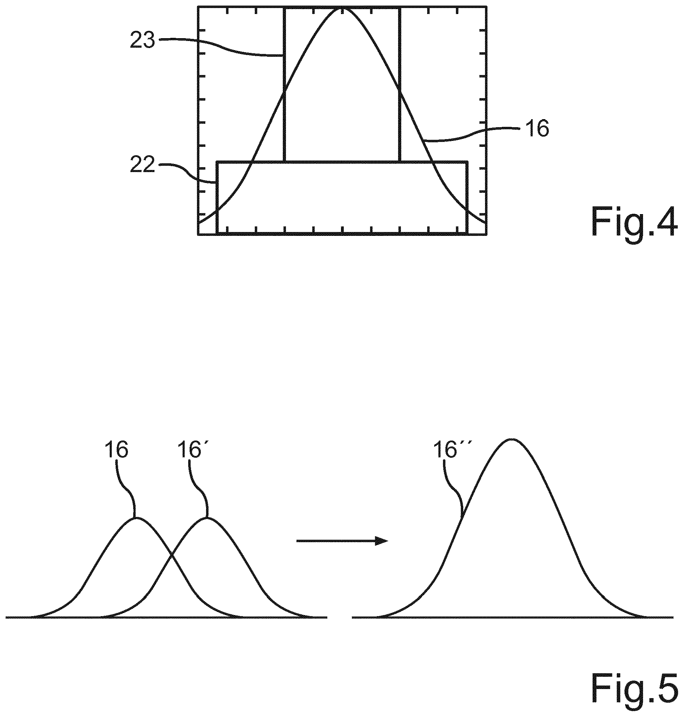

Bei der technischen Umsetzung können weitere Optimierungen durchgeführt werden. So können die Rohlichtverteilungen beispielsweise durch einfache Geometrien angenähert werden. Beispielsweise wird die Rohlichtverteilung 16 von Fig. 3 durch zwei übereinander angeordnete Rechtecke 22 und 23 angenähert (vgl. Fig. 4). Somit lässt sich die benötigte LED-Dimmung bei geringer Rechenkapazität eher in Echtzeit berechnen. Gegebenenfalls können auch abhängig von der Rechenzeit und der gewünschten Genauigkeit bessere oder schlechtere Annäherungen benutzt werden.

Falls mehr als eine Lichtquelle bzw. LEDs zur Erzeugung der Lichtverteilung interagieren, ist es notwendig, gleichzeitig die Stromstärke oder die Duty-Cycle von mehreren LEDs anzupassen. Als Grundbedingung wird der Duty-Cycle für jede LED so angepasst, dass in jedem Zeitpunkt die resultierende Farbe aus der Farbmischung der mehreren LEDs konstant bleibt. Mit diesem Verfahren können die benötigten Duty-Cycle für jede LED im Voraus berechnet und in eine Wertetabelle gespeichert werden. Aus den Rohlichtverteilungen, z.B. 16 und 16', von zwei LEDs ergibt sich gemäß Fig. 5 eine Gesamtrohlichtverteilung 16" Erst diese Gesamtrohlichtverteilung 16" ist dann für den Schritt c) des obigen Verfahrens relevant. Die anderen Schritte des Verfahrens müssen für die mehreren LEDs nicht modifiziert werden.

Bei der Realisierung kann der mittlere Duty-Cycle K für alle Pixel wie folgt berechnet werden:

$$K = \frac{\sum_{i=1}^{m}\sum_{j=1}^{n} A_{ij}}{\sum_{i=1}^{m}\sum_{j=1}^{n} 1} = \frac{\sum_{i=1}^{m}\sum_{j=1}^{n} A_{ij}}{m \cdot n}$$

Dabei steht n und m für die jeweilig Anzahl an Pixeln in horizontaler bzw. vertikaler Richtung und jedes Element $A_{ij}$ einer Matrix A für das jeweilige Ein-Aus-Verhältnis eines jeweiligen Pixels, und es ist vorausgesetzt, dass das DMD-Modul homogen beleuchtet ist. Mit diesem Wert des mittleren Duty-Cycle K, dem Systemwirkungsgrad $\eta_{DMDhom}$ und der Konversionsrate R (in Lumen pro Watt, z.B. für Phosphor) kann die mittlere optische Leistung wie folgt berechnet werden:

$$P_{mean} = \frac{1}{R \cdot K \cdot \eta_{DMD\,hom}} \sum_{i=1}^{m}\sum_{j=1}^{n} \phi_{ij}$$

Dabei ist $\Phi_{ij}$ der jeweilige Lichtstromwert (z.B. auf der Straße) für jedes Pixel des DMD-Moduls. Die optische Leistung kann bei Nutzung des Quantenwirkungsgrads (wall-plug-efficiency) der LED in elektrische Leistung umgerechnet werden.

**Patentansprüche**

1. Beleuchtungsvorrichtung (5) für ein Fahrzeug mit

   - einer Lichtquelle (7),
   - einer Ansteuereinrichtung (6) zum Ansteuern der Lichtquelle (7) und
   - einer Flächenmodulationseinrichtung (9), mit der das Licht der Lichtquelle (7) pixelweise modulierbar ist,

   **dadurch gekennzeichnet, dass**

   - die Ansteuereinrichtung (6) dazu eingerichtet ist, die Lichtquelle (7) derart anzusteuern, dass mehrere Rohlichtverteilungen (13 bis 16) erzeugbar sind, wobei jede Rohlichtverteilung diejenige örtliche Lichtverteilung ist, die alleine mit der Lichtquelle (7) erzielt wird und sich aus einem Strom einer jeweiligen Stromstärke ergibt, welcher in die Lichtquelle (7) fließt,
   - die Beleuchtungsvorrichtung (5) eine Recheneinrichtung aufweist, die dazu eingerichtet ist, diejenige der mehreren Rohlichtverteilungen (13 bis 16) zu bestimmen, welche einen niedrigsten Beleuchtungsstärkeverlauf besitzt, der aber überall mindestens so hoch ist wie eine vorgegebene Lichtverteilung, und
   - die Flächenmodulationseinrichtung (9) ausgestaltet ist, alle Bereiche der bestimmten Rohlichtverteilung, in denen die jeweiligen Beleuchtungsstärkewerte oberhalb der vorgegebenen Lichtverteilung liegen, in ihrer Beleuchtungsstärke zu reduzieren, sodass die vorgegebene Lichtverteilung erreicht wird.

2. Beleuchtungsvorrichtung (5) nach Anspruch 1, wobei die Rohlichtverteilungen (13 bis 16) jeweils vorgegeben sind.

3. Beleuchtungsvorrichtung (5) nach Anspruch 2, wobei die vorgegebenen Rohlichtverteilungen (13 bis 16) jeweils durch eine entsprechende Näherungslichtverteilung (22, 23) angenähert sind.

4. Beleuchtungsvorrichtung (5) nach Anspruch 3, wobei die Näherungslichtverteilungen (22, 23) jeweils durch ein oder mehrere Rechtecke gebildet sind.

5. Beleuchtungsvorrichtung (5) nach einem der vorhergehenden Ansprüche, wobei die Flächenmodulationseinrichtung (9) ein DMD-Element, ein LCOS-Element oder ein LCD-Element aufweist.

6. Beleuchtungsvorrichtung (5) nach einem der vorhergehenden Ansprüche, wobei die Lichtquelle (7) eine Leuchtdiode oder einen Laser umfasst.

**7.** Beleuchtungsvorrichtung (5) nach einem der vorhergehenden Ansprüche, die eine Sensoreinrichtung aufweist, mit der ein Umfeldparameter aus dem Umfeld der Beleuchtungsvorrichtung (5) erfassbar ist, und die Recheneinrichtung, die Ansteuereinrichtung (6) und/oder die Flächenmodulationseinrichtung (9) dazu ausgebildet sind, dynamisch den Umfeldparameter zu berücksichtigen.

**8.** Fahrzeug mit einer Beleuchtungsvorrichtung (5) nach einem der vorhergehenden Ansprüche.

**9.** Verfahren zum Betreiben einer Beleuchtungsvorrichtung (5) für ein Fahrzeug durch

- Ansteuern einer Lichtquelle (7) mit einer Ansteuereinrichtung (6), und
- pixelweises Modulieren eines Lichts der Lichtquelle (7) mit einer Flächenmodulationseinrichtung (9),

**dadurch gekennzeichnet, dass**

- die Lichtquelle (7) zum Erzeugen einer von mehreren vorgegebenen Rohlichtverteilungen (13 bis 16) angesteuert wird, wobei jede Rohlichtverteilung diejenige örtliche Lichtverteilung ist, die alleine mit der Lichtquelle (7) erzielt wird und sich aus einem Strom einer jeweiligen Stromstärke ergibt, welcher in die Lichtquelle (7) fließt,
- diejenige der mehreren vorgegebenen Rohlichtverteilungen (13 bis 16) verwendet wird, welche einen niedrigsten Beleuchtungsstärkeverlauf besitzt, der aber überall mindestens so hoch ist wie eine vorgegebene Lichtverteilung und
- alle Bereiche der bestimmten Rohlichtverteilung mithilfe der Flächenmodulationseinrichtung (9) in ihrer Beleuchtungsstärke reduziert werden, in denen die jeweiligen Beleuchtungsstärkewerte oberhalb der vorgegebenen Lichtverteilung liegen, um die vorgegebene Lichtverteilung zu erreichen.

**10.** Verfahren nach Anspruch 9, wobei die Beleuchtungsvorrichtung (5) neben der Lichtquelle (7) mindestens eine weitere Lichtquelle aufweist, und die Lichtquellen von der Ansteuereinrichtung (6) so angesteuert werden, dass bei jeder von ihnen erzeugten Rohlichtverteilung in Summe weißes Licht gebildet wird.

**Claims**

**1.** Lighting device (5) for a motor vehicle with

- a light source (7),
- a control device (6) for controlling the light source (7) and
- a surface modulation device (9), by means of which the light from the light source (7) can be modulated pixel-by-pixel,

**characterised in that**

- the control device (6) is configured to control the light source (7) such that several raw light distributions (13 to 16) can be generated, wherein each raw light distribution is the particular local light distribution which is achieved solely by the light source (7) and is produced from a current with a respective current strength which flows into the light source (7),
- the lighting device (5) has a computer device which is configured to determine the particular raw light distribution of the several raw light distributions (13 to 16), which possesses a lowest light intensity curve, which is however overall as least so high as a predefined light distribution and
- the surface modulation device (9) is configured to reduce all areas of the specific raw light distribution in which the respective light intensity values are above the predefined light distribution in their light intensity so that the predefined light distribution is achieved.

**2.** Lighting device (5) according to claim 1, wherein the raw light distributions (13 to 16) are predefined respectively.

**3.** Lighting device (5) according to claim 2, wherein the predefined raw light distributions (13 to 16) are approximated respectively by a corresponding proximity light distribution (22, 23).

**4.** Lighting device (5) according to claim 3, wherein the proximity light distributions (22, 23) are formed respectively by one or more rectangles.

**5.** Lighting device (5) according to any of the preceding claims, wherein the surface modulation device (9) has a DMD element, an LCOS element or an LCD element.

**6.** Lighting device (5) according to any of the preceding claims, wherein the light source (7) comprise a light-emitting diode or a laser.

**7.** Lighting device (5) according to any of the preceding claims, which has a sensor device by means of which an environmental parameter can be determined from the surrounding area of the lighting device (5), and the computer device, the control device (6) and/or the surface modulation device (9) are designed to take into account the environmental parameter dynamically.

8. Motor vehicle with a lighting device (5) according to any of the preceding claims.

9. Method for operating a lighting device (5) for a motor vehicle by

- controlling a light source (7) by means of a control device (6) and
- modulating pixel-by-pixel a light of the light source (7) by means of a surface modulation device (9),

**characterised in that**

- the light source (7) is controlled for generating one of several predefined raw light distributions (13 to 16), wherein each raw light distribution is the particular local light distribution which is achieved solely by the light source (7) and is produced from a current of a respective current strength which flows into the light source (7),
- that particular raw light distribution of the several predefined raw light distributions (13 to 16) is used which possesses the lowest light intensity curve but overall is as least as high as a predefined light distribution and
- all areas of the specific raw light distribution are reduced in their light intensity by means of the surface modulation device (9), in which the respective light intensity values are above the predefined light distribution in order to achieve the predefined light distribution.

10. Method according to claim 9, wherein the lighting device (5), along with the light source (7), has at least one additional light source and the light sources are controlled by the control device (6) so that white light is formed with each raw light distribution generated thereby.

**Revendications**

1. Dispositif d'éclairage (5) pour un véhicule avec

- une source de lumière (7),
- un système de commande (6) servant à commander la source de lumière (7) et
- un système de modulation de surface (9), avec lequel la lumière de la source de lumière (7) peut être modulée en forme de pixels,

**caractérisé en ce que**

- le système de commande (6) est conçu pour commander la source de lumière (7) de telle manière que plusieurs distributions de lumière brute (13 à 16) peuvent être générées, dans lequel chaque distribution de lumière brute est la distribution de lumière locale qui est obtenue seulement avec la source de lumière (7) et résulte d'un flux d'une intensité de flux respective, qui s'écoule dans la source de lumière (7),
- le dispositif d'éclairage (5) présente un système de calcul, qui est conçu pour définir celle des plusieurs distributions de lumière brute (13 à 16) qui possède une évolution d'intensité d'éclairage la plus basse, qui toutefois est partout au moins aussi élevée qu'une distribution de lumière prédéfinie, et
- le système de modulation de surface (9) est configuré pour réduire l'intensité d'éclairage de toutes les zones de la distribution de lumière brute définie, dans lesquelles les valeurs d'intensité d'éclairage respectives sont supérieures à la distribution de lumière prédéfinie, de sorte que la distribution de lumière prédéfinie soit atteinte.

2. Dispositif d'éclairage (5) selon la revendication 1, dans lequel les distributions de lumière brute (13 à 16) sont respectivement prédéfinies.

3. Dispositif d'éclairage (5) selon la revendication 2, dans lequel les distributions de lumière brute (13 à 16) prédéfinies sont approchées respectivement par une distribution de lumière d'approche (22, 23) correspondante.

4. Dispositif d'éclairage (5) selon la revendication 3, dans lequel les distributions de lumière d'approche (22, 23) sont formées respectivement par un ou plusieurs rectangles.

5. Dispositif d'éclairage (5) selon l'une quelconque des revendications précédentes, dans lequel le système de modulation de surface (9) présente un élément DMD, un élément LCOS ou un élément LCD.

6. Dispositif d'éclairage (5) selon l'une quelconque des revendications précédentes, dans lequel la source de lumière (7) comprend une diode électroluminescente ou un laser.

7. Dispositif d'éclairage (5) selon l'une quelconque des revendications précédentes, qui présente un système de capteur, avec lequel un paramètre d'environnement issu de l'environnement du dispositif d'éclairage (5) peut être détecté, et le système de calcul, le système de commande (6) et/ou le système de modulation de surface (9) sont réalisés pour prendre en compte de manière dynamique le paramètre d'environnement.

**8.** Véhicule avec un dispositif d'éclairage (5) selon l'une quelconque des revendications précédentes.

**9.** Procédé servant à faire fonctionner un dispositif d'éclairage (5) pour un véhicule par

- commande d'une source de lumière (7) avec un système de commande (6), et
- modulation sous forme de pixels d'une lumière de la source de lumière (7) avec un système de modulation de surface (9),

**caractérisé en ce que**

- la source de lumière (7) est commandée pour générer une de plusieurs distributions de lumière brute (13 à 16) prédéfinies, dans lequel chaque distribution de lumière brute est la distribution de lumière locale qui est obtenue seulement avec la source de lumière (7) et résulte d'un flux d'une intensité de flux respective, qui s'écoule dans la source de lumière (7),
- est utilisée celle des plusieurs distributions de lumière brute (13 à 16) prédéfinies qui possède une évolution d'intensité d'éclairage la plus basse, qui toutefois est partout au moins aussi élevée qu'une distribution de lumière prédéfinie, et
- l'intensité d'éclairage de toutes les zones de la distribution de lumière brute définie est réduite à l'aide du système de modulation de surface (9), dans lesquelles les valeurs d'intensité d'éclairage respectives sont supérieures à la distribution de lumière prédéfinie pour atteindre la distribution de lumière prédéfinie.

**10.** Procédé selon la revendication 9, dans lequel le dispositif d'éclairage (5) présente, outre la source de lumière (7), au moins une autre source de lumière, et les sources de lumière sont commandées par le système de commande (6) de telle sorte qu'une lumière blanche est formée au total pour chaque distribution de lumière brute générée par celles-ci.

Fig.1

Fig.2

Fig.3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20150124468 A1
- EP 1363065 A1
- EP 1443355 A2
- WO 2015089018 A1